# EUROPÄISCHE PATENTANMELDUNG

(11) **EP 3 885 390 A1**
(43) Veröffentlichungstag der Anmeldung: **29.09.2021**
(21) Anmeldenummer: 20165733.5
(22) Anmeldetag: 25.03.2020
(51) Int. Cl.: C08G 63/42, C08G 63/87, C08G 65/26

(54) **VERFAHREN ZUR HERSTELLUNG EINES ETHERESTEROLS**

(71) Anmelder: Covestro Deutschland AG, 51373 Leverkusen (DE)
(72) Erfinder: MACHAT, Martin, 50668 Köln (DE); WOLF, Aurel, 42489 Wülfrath (DE); GÜRTLER, Christoph, 50735 Köln (DE); MARBACH, Jakob, 51465 Bergisch Gladbach (DE)
(74) Vertreter: Levpat

(57) **Zusammenfassung**

Gegenstand der Erfindung ist Verfahren zur Herstellung eines Etheresterols, bevorzugt eines Polyetheresterols, durch Umsetzung einer H-funktionellen Startersubstanz (1) mit einem cyclischen Anhydrid (2) in Gegenwart eines Katalysators (4), wobei das cyclische Anhydrid (2) ein spezifisches Alkylbernsteinsäureanhydrid (2-1) enthält. Ein weiterer Gegenstand sind Etheresterole, bevorzugt Polyetheresterole erhältlich nach dem erfindungsgemäßen Verfahren.

## Beschreibung

Gegenstand der Erfindung ist Verfahren zur Herstellung eines Etheresterols, bevorzugt eines Polyetheresterols, durch Umsetzung einer H-funktionellen Startersubstanz (1) mit einem cyclischen Anhydrid (2) in Gegenwart eines Katalysators (4), wobei das cyclische Anhydrid (2) ein spezifisches Alkylbernsteinsäureanhydrid (2-1) enthält. Ein weiterer Gegenstand sind Etheresterole, bevorzugt Polyetheresterole erhältlich nach dem erfindungsgemäßen Verfahren.

In WO 2012/126921 A1 werden Polyester offenbart, welche Wiederholungseinheiten basierend auf mindestens einer aliphatischen Dicarbonsäure oder einem Ester bildenden Derivat davon als Komponente A1, mindestens einer aromatischen Dicarbonsäure oder einem Ester bildenden Derivat davon, mindestens einem Diol aufweist, wobei die Komponente A1 2-Methylbernsteinsaure oder ein Ester bildendes Derivat davon enthält. Der entsprechende Polyester wird über eine Polykondensationsreaktion hergestellt, wobei das sich das bildende Wasser abgetrennt werden muss.

Aufgabe der vorliegenden Anmeldung war ein effizientes und einfach-aufskalierbares Verfahren zur Herstellung von Etheresterolen bevorzugt Polyetheresterolen mit verbesserter Verfahrenskontrolle bereitzustellen, bei der das Produkt in möglichst wenigen Herstellungsschritten bereitgestellt werden kann. Darüber hinaus sollen die Viskosität der resultierenden Etheresterol- bevorzugt der Polyetheresterol-Produkte gegenüber Stand der Technik Systemen für definierte Zusammensetzung und gegebene OH-Zahl (Hydroxylzahl) reduziert werden oder gar eine Kristallisation der Etheresterole vermieden werden. Somit soll ermöglicht werden, dass diese Produkte direkt oder mindestens vereinfacht in der nachfolgenden Polyurethan (PU)-Herstellung, bevorzugt PU-Hartschaumherstellung als Monol oder Polyol-Komponente eingesetzt werden können. Die resultierenden PU-Hartschäume sollen dabei gleichwertige oder verbesserte physikalische Eigenschaften, wie Schaumkenngrößen oder Flammenschutzeigenschaften, im Vergleich zu Stand der Technik Formulierungen aufweisen. Darüber hinaus soll auch der Umsatz der eingesetzten Edukte verbessert werden, beispielsweise Erhöhung des Umsatzes an Alkylenoxid, um die aufwendige Abtrennung, Aufreinigung und Wiederverwendung bzw. Entsorgung dieser teilweise toxischen Ausgangsstoffe zu reduzieren.

Überraschend wurde gefunden, dass die erfindungsgemäße Aufgabe gelöst wird durch ein Verfahren zur Herstellung eines Etheresterols, bevorzugt eines Polyetheresterols, durch Umsetzung einer H-funktionellen Startersubstanz (1) mit einem cyclischen Anhydrid (2) in Gegenwart eines Katalysators (4);
wobei das cyclische Anhydrid (2) Alkylbernsteinsäureanhydrid (2-1) der folgenden Formel (I) enthält: 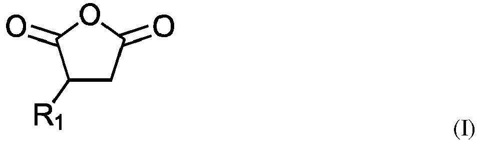 wobei R₁ Methyl, Ethyl, n-Propyl, iso-Propyl, n-Butyl, iso-Butyl, n-Pentyl, iso-Pentyl, n-Hexyl, iso-Hexyl, n -Heptyl, iso-Heptyl, n-Octyl, iso-Octyl, n-Nonyl, iso-Nonyl, n-Decyl, iso-Decyl, n-Dodecanyl, iso-Dodecyl oder Cyclohexyl, bevorzugt Methyl, Ethyl, n-Propyl, iso-Propyl, n-Butyl, iso-Butyl n-Hexyl oder iso-Hexyl und besonders bevorzugt Methyl ist.

Unter erfindungsgemäßen Etheresterolen sind Verbindungen zu verstehen, welche ein oder mehrere Etherfunktionalitäten (Ethergruppen), eine oder mehrere Esterfunktionalitäten (Estergruppen) sowie eine oder mehrere Hydroxylfunktionalitäten (Monole oder Polyole) aufweist. Die Etherfunktionalitäten resultieren hierbei durch Ringöffnung des Alkylenoxids (3) und Anlagerung mindestens von zwei oder mehreren Alkylenoxiden an eine H-funktioneller Startersubstanz (1). Die Esterfunktionalitäten werden beispielsweise durch Ringöffnung des cyclischen Anhydrids (2) und Umsetzung mit einer Hydroxylgruppen-enthaltenden Verbindung wie H-funktionelle Startersubstanz (1) mit terminalen Hydroxylgruppen gebildet. Die Hydroxylfunktionalitäten (Monole oder Polyole) resultieren infolge der Ringöffnung des Alkylenoxids (3) und Anlagerung an H-funktionelle Startersubstanz (1) und/oder an durch Ringöffnung der cyclischen Anhydride (2) gebildeten Halbestern. Die Anzahl der jeweiligen Ether-, Ester- und Hydroxylfunktionalitäten, vorrangig von Ether- und Ester-Funktionalitäten ist erfindungsgemäß abhängig vom Stoffmengenverhältnis der H-funktioneller Startersubstanz (1), des cyclischen Anhydrids (2) und des verwendeten Alkylenoxid (3). Darüber hinaus ist die Hydroxylfunktionalität (Mono-oder Polyol) stark abhängig von der Funktionalität der eingesetzten H-funktionellen Startersubstanz (1). Darüber hinaus können auch zusätzliche Imidfunktionalitäten oder Amidfunktionalitäten bei Verwendung einer NH-funktionellen Startersubstanz (1-3) oder einer NH2-funktionellen Startersubstanz (1-2) gebildet werden.

Erfindungsgemäß hat ein Polyetheresterol eine oder mehrere bevorzugt mehrere Etherfunktionalitäten, eine oder mehrere bevorzugt mehrere Esterfunktionalitäten sowie eine oder mehrere bevorzugt mehrere Hydroxylfunktionalitäten, welche statistisch und/oder blockweise über das Polyetheresterol verteilt sein können.

In einer Ausführungsform des erfindungsgemäßen Verfahrens ist die H-funktionelle Startersubstanz (1) eine OH-funktionelle Startersubstanz(1-1), eine NH2-funktionelle Startersubstanz (1-2), eine NH-funktionelle Startersubstanz (1-3) und/oder eine COOH funktionelle Startersubstanz (1-4) bevorzugt eine OH-funktionelle Startersubstanz (1-1) und/oder eine COOH funktionelle Startersubstanz (1-4) und besonders bevorzugt eine OH-funktionelle Startersubstanz (1-1).

Hierbei ist unter einer OH-funktionellen Startersubstanz (1-1) eine Verbindung mit mindestens einer freien Hydroxylgruppe, eine NH₂-funktionelle Startersubstanz (1-2) mit mindestens einer primären Amin Gruppe, eine NH-funktionelle Startersubstanz (1-3) mit mindestens einer sekundären Amin Gruppe und/oder eine COOH funktionelle Startersubstanz (1-4) mit mindestens einer freien Carboxylgruppe zu verstehen.

Als H-funktionelle Startersubstanz können beispielsweise eine oder mehrere Verbindungen ausgewählt werden aus der Gruppe umfassend Wasser bzw. ein- oder mehrwertige Alkohole, ein- oder mehrwertige Carbonsäuren, Hydroxycarbonsäuren, Hydroxyester, Polyetherpolyole, Polyesterpolyole, Polyesteretherpolyole, Polyethercarbonatpolyole, Polyetherestercarbonatpolyole, Polycarbonatpolyole, Polycarbonate, Polytetrahydrofurane (z.B. PolyTHF® der BASF, wie z.B. PolyTHF® 250, 650S, 1000, 1000S, 1400, 1800, 2000), Polyacrylatpolyole, Ricinusöl, das Mono-oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C1-C23 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanzen können Alkohole, Thiole und Carbonsäuren eingesetzt werden. Als monofunktionelle Alkohole können Verwendung finden: Methanol, Ethanol, Ethenol, 1-Propanol, 2-Propanol, 2-Propenol, 1-Butanol, 2-Butanol, tert-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, 1-Dodecanol, Palmerol, 1-Hexadecanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin.

Geeignete mehrwertige Alkohole als OH-funktionelle Startersubstanzen (1-1) mit mindestens zwei terminalen Hydroxylgruppen sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Als NH₂-funktionelle Startersubstanzen (1-2) sind beispielsweise Butylamin, *tert*-Butylamin, Pentylamin, Hexylamin, Anilin, Aziridin, Pyrrolidin, Piperidin, Morpholin, Pentamethylendiamin (PDA), Hexamethylendiamin (HDA), Isomorphondiamin(IPDA), Toluoldiamin (TDA) einschließlich der bekannten Regiosisomere 2,4-TDA, 2,6-TDA, 2,3-TDA und 3,4-TDA sowie Diaminodiphenylmethan (MDA) einschließlich der bekannten Regioisomere 2,4'-MDA und 4,4'-MDA zu nennen.

Als NH-funktionelle Startersubstanzen (1-3) sind Derivate des Ammoniaks mit Alkyl und / oder Arylsubstituenten, wie beispielsweise Dimethylamin, Diethylamin, Diispropylamlin, Dibutylamin, Di-*tert*-butylamin, Dipentylamin, Dihexylamin, Diphenylamin, zu nennen. Darüber hinaus sind Verbindungen mit mehreren NH-Funktionalitäten möglich.

Als einwertige Carbonsäuren als COOH-funktionelle Startersubstanz (1-4) mit einer freien Carboxylgruppe eignen sich Methansäure, Ethansäure, Propansäure, Butansäure, Pentansäure, Hexansäure, Heptansäure, Octansäure, Milchsäure, Stearinsäure, Palmitinsäure, Ölsäure, Linolsäure, Linolensäure, Benzoesäure, Acrylsäure, Fluoressigsäure, Chloressigsäure, Bromessigsäure, Iodessigsäure, Difluoressigsäure, Trifluoressigsäure, Dichloressigsäure, Trichloressigsäure, Ölsäure, Salicylsäure und Benzoesäure. Darüber hinaus können Gemische aus Fettsäure-/Fettalkohol eingesetzt werden, bevorzugt C10-C18.

Als mehrwertige Carbonsäuren als COOH funktionelle Startersubstanz (1-4) mit mindestens zwei Carboxygruppen eignen sich Oxalsäure, Malonsäure, Bernsteinsäure, Glutarsäure, Adipinsäure, Pimelinsäure, Korksäure, Azelainsäure, Sebacinsäure, Trimesinsäure, Fumarsäure, Maleinsäure, 1,10-Decandicarbonsäure, 1,12-Dodecandicarbonsäure, Phthalsäure, Isophthalsäure, Terephthalsäure, Pyromellitsäure und Trimellitsäure.

Als H-funktionelle Startersubstanzen geeignete Hydroxycarbonsäuren einwertige Carbonsäuren als COOH funktionelle Startersubstanz (1-4) mit mindestens einer freien Carboxylgruppe sind beispielsweise Ricinolsäure, Glycolsäure, Milchsäure, 3-Hydroxypropionsäure, Äpfelsäure, Zitronensäure, Mandelsäure, Tartronsäure, Weinsäure, Mevalonsäure, 4-Hydroxybuttersäure, Salicylsäure, 4-Hyroxybenzoesäure und Isocitronensäure.

Die H-funktionellen Startersubstanzen (1) können auch aus der Substanzklasse der Polyetherpolyole ausgewählt sein, insbesondere solchen mit einem Molekulargewicht Mn im Bereich von 50 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Covestro AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Startersubstanzen (1) können auch aus der Substanzklasse der Polyesterpolyole ausgewählt sein, insbesondere solchen mit einem Molekulargewicht Mn im Bereich von 50 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Bernsteinsäureanhydrid, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Die resultierenden Polyesterpolyole weisen hierbei terminale Hydroxy und/oder Carboxygruppen auf.

Des Weiteren können als H-funktionelle Startersubstanzen (1) Polycarbonatdiole eingesetzt werden, insbesondere solche mit einem Molekulargewicht Mn im Bereich von 50 bis 4500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der CovestroAG verwendet werden, wie z.B. Desmophen® C 1100 oder Desmophen® C 2200.

In einer weiteren Ausführungsform der Erfindung können Polyethercarbonatpolyole (z.B. cardyon® Polyole der Fa. Covestro), Polycarbonatpolyole (z.B. Converge® Polyole der Fa. Novomer / Saudi Aramco, NEOSPOL Polyole der Fa. Repsol etc.) und/oder Polyetherestercarbonatpolyole als H-funktionelle Starterverbindungen eingesetzt werden. Insbesondere können Polyethercarbonatpolyole, Polycarbonatpolyole und/oder Polyetherestercarbonatpolyole durch Umsetzung von Alkylenoxiden, bevorzugt Ethylenoxid, Propylenoxid oder deren Mischungen, optional weiteren Co-Monomeren mit CO2 in Gegenwart einer weiteren H-funktionellen Starterverbindung und unter Verwendung von Katalysatoren erhalten werden. Diese Katalysatoren umfassen Doppelmetallcyanid-Katalysatoren (DMC-Katalysatoren) und/oder Metallkomplexkatalysatoren beispielsweise auf Basis der Metalle Zink und/oder Cobalt, wie beispielsweise Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284) und sogenannte Cobalt-Salen-Katalysatoren (beschrieben z.B. in US 7,304,172 B2, US 2012/0165549 A1) und/oder Mangan-Salen Komplexe. Eine Übersicht über die bekannten Katalysatoren für die Copolymerisation von Alkylenoxiden und CO2 gibt zum Beispiel Chemical Communications 47 (2011) 141-163. Durch die Verwendung unterschiedlicher Katalysatorsysteme, Reaktionsbedingungen und/oder Reaktionssequenzen erfolgt hierbei die Bildung von statistischen, alternierenden, blockartigen oder gradientenartigen Polyethercarbonatpolyole, Polycarbonatpoylole und/oder Polyetherestercarbonatpolyole. Diese als H-funktionelle Starterverbindungen eingesetzten Polyethercarbonatpolyole, Polycarbonatpoylole und/oder Polyetherestercarbonatpolyole können hierzu in einem separaten Reaktionsschritt zuvor hergestellt werden.

Die H-funktionellen Startersubstanzen (1) weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole mit einer Zusammensetzung nach der allgemeinen Formel (II),

HO-(CH₂)ₓ-OH (II)

wobei x eine Zahl von 1 bis 20, bevorzugt eine gerade Zahl von 2 bis 20 ist. Beispiele für Alkohole gemäß Formel (II) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin und Pentaerythrit.

Weiterhin bevorzugt werden als H-funktionelle Startersubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei OH-funktionelle Startersubstanz (1-1) um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylol¬propan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt eine OH-Funktionalität von 2 bis 4 und ein Molekulargewicht Mn im Bereich von 62 bis 4500 g/mol und insbesondere ein Molekulargewicht Mn im Bereich von 62 bis 3000 g/mol.

In einer Ausführungsform des erfindungsgemäßen Verfahrens beträgt OH-Funktionalität von 2 bis 6 und ein Molekulargewicht von 18 g/mol bis 2000 g/mol, bevorzugt von 2 bis 4 und bevorzugt von 60 g/mol bis 1000 g/mol auf.

In einer Ausführungsform des erfindungsgemäßen Verfahrens ist die H-funktionelle Startersubstanz ein oder mehrere Verbindung(en) und ausgewählt wird aus der Gruppe bestehend aus Wasser, Ethylenglycol, Diethylenglycol, Polyethylenglycol, Dipropylenglykol, Polypropylenglycol, 1,3-Butandiol, 1,4-Butandiol 1,1,1-Trimethylolpropan, Glycerin, Pentaerythritol, Sorbitol, Saccarose, Xylitol, 1,2-Propandiol, 1,3-Propandiol, Bernsteinsäure, Adipinsäure, Glutarsäure, Pimelinsäure, Maleinsäure, Phthalsäure, Terephtalsäure, Milchsäure, Zitronensäure, Salicylsäure und Ester der vorgenannten Alkohole und Säuren.

Cyclische Anhydride (2) gemäß des erfindungsgemäßen Verfahrens sind cyclische Verbindungen enthaltend eine Anhydridgruppe im Ring. Bevorzugte Verbindungen sind Succinsäureanhydrid (Bernsteinsäure¬anhydrid), Maleinsäureanhydrid, Phthalsäureanhydrid, 1,2-Cyclohexandicarbonsäureanhydrid, Diphensäure¬anhydrid, Tetrahydro¬phthalsäureanhydrid, Methyltetra¬hydrophthalsäure¬anhydrid, Norbornendisäureanhydrid und ihre Chlorierungsprodukte, Glutar-säure¬anhydrid, Diglykolsäureanhydrid, 1,8-Naphthalsäureanhydrid, Succinsäure¬anhydrid (Bernstein¬säure¬anhydrid), Dodecenyl¬bernsteinsäure¬anhydrid, Tetra¬decenyl¬bernstein¬säure¬anhydrid, Hexadecenylbernsteinsäure¬anhydrid, Octa¬decenyl¬bernstein¬säureanhydrid, 3- und 4-Nitrophthalsäureanhydrid, Tetrachlor¬phthalsäure¬anhydrid, Tetrabrom¬phthalsäureanhydrid, Itaconsäureanhydrid, Dimethyl¬maleinsäure¬anhydrid, Allylnorbornen¬disäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäure¬anhydrid (Bernsteinsäureanhydrid), Maleinsäureanhydrid und Phthalsäureanhydrid.

Im erfindungsgemäßen Verfahren enthält das cyclische Anhydrid (2) Alkylbernsteinsäureanhydrid (2-1) der folgende Formel (I): 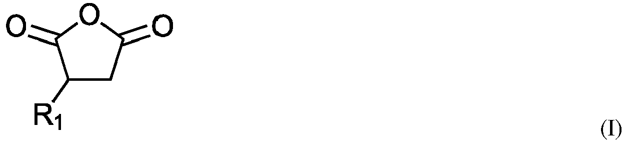 wobei R1 Methyl, Ethyl, n-Propyl, iso-Propyl, n-Butyl, iso-Butyl, n-Pentyl, iso-Pentyl, n-Hexyl, iso-Hexyl, n -Heptyl, iso-Heptyl, n-Octyl, iso-Octyl, n-Nonyl, iso-Nonyl, n-Decyl, iso-Decyl, n-Dodecanyl, iso-Dodecyl oder Cyclohexyl, bevorzugt Methyl, Ethyl, n-Propyl, iso-Propyl, n-Butyl, iso-Butyl n-Hexyl oder iso-Hexyl und besonders bevorzugt Methyl (Methylbernsteinsäure) ist.

In einer Ausführungsform des erfindungsgemäßen Verfahrens beträgt der Stoffmengenanteil des Alkylbernsteinsäureanhydrids (2-1) von 5 mol-% bis 100 mol-% bevorzugt von 15 mol-% bis 100 mol-% und besonders bevorzugt von 25 mol-% bis 100 mol-% bezogen auf die Summe aller eingesetzten cyclischen Anhydride (2).

In einer Ausführungsform des erfindungsgemäßen Verfahrens erfolgt die Umsetzung der H-funktionellen Startersubstanz (1) mit dem cyclischen Anhydrid (2) in Gegenwart des Katalysators (4) und in Gegenwart eines Alkylenoxids (3).

In dem erfindungsgemäßen Verfahren können als Alkylenoxide (3) Alkylenoxide mit 2-45 Kohlenstoffatomen eingesetzt werden. Bei den Alkylenoxiden mit 2 - 45 Kohlenstoffatomen handelt es sich beispielsweise um eine oder mehrere Verbindungen ausgewählt aus der Gruppe umfassend Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, Alkylenoxide von C6-C22 α-Olefinen, wie 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester epoxidierter Fettsäuren, Epichlorhydrin, Glycidol, und Derivate des Glycidols wie beispielsweise Glycidylether von C1-C22 Alkanolen, Glycidylester von C1-C22 Alkancarbonsäuren. Beispiele für Derivate des Glycidols sind Phenylglycidylether, Kresylglycidylether, Methylglycidylether, Ethylglycidylether und 2-Ethylhexylglycidylether. Vorzugsweise werden als Alkylenoxide Ethylenoxid und/oder Propylenoxid, besonders bevorzugt Ethylenoxid als Alkylenoxid (3) eingesetzt.

Werden Ethylenoxid und Propylenoxid in Mischung eingesetzt, so beträgt das molare Verhältnis von Ethylenoxid zu Propylenoxid von 1:99 bis 99:1, bevorzugt von 95:5 bis 50:50.

In einer Ausführungsform des erfindungsgemäßen Verfahrens wird das cyclische Alkylenoxid (3) kontinuierlich oder stufenweise in den Reaktor zugegeben.

In einer Ausführungsform des erfindungsgemäßen Verfahrens ist der Katalysator (4) ein Amin, ein Doppelmetallcyanid (DMC)-Katalysator und/oder eine Brönsted-Säure bevorzugt ein Amin.

In einer Ausführungsform des erfindungsgemäßen Verfahrens wird ein Doppelmetallcyanid (DMC)-Katalysator als Katalysator (4) verwendet, wobei die einsetzbaren DMC-Katalysatoren enthalten Doppelmetallcyanid-Verbindungen, die die Reaktionsprodukte wasserlöslicher Metallsalze und wasserlöslicher Metallcyanidsalze sind.

Doppelmetallcyanid (DMC)-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyoxyalkylenpolyolen bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. *tert*-Butanol) noch einen Polyether mit einem zahlenmittlerem Molekulargewicht größer als 500 g/mol enthalten.

Die erfindungsgemäß einsetzbaren DMC-Katalysatoren werden vorzugsweise erhalten, indem man
(1.) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(2.) wobei im zweiten Schritt der Feststoff aus der aus (1.) erhaltenen Suspension durch bekannte Techniken (wie Zentrifugation oder Filtration) abgetrennt wird,
(3.) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(4.) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,
und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäß einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (III) auf,

M(X)ₙ (III),

wobei
M ausgewählt ist aus den Metallkationen Zn²⁺, Fe²⁺, Ni²⁺, Mn²⁺, Co²⁺, Sr²⁺, Sn²⁺, Pb²⁺ und, Cu²⁺, bevorzugt ist M Zn²⁺, Fe²⁺, Co²⁺ oder Ni²⁺,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat und
n ist 2, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (IV) auf,

Mᵣ(X)₃ (IV),

wobei
M ausgewählt ist aus den Metallkationen Fe³⁺, Al³⁺, Co³⁺ und Cr³⁺,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat,
Cyanat, Thiocyanate Isocyanat, Isothiocyanat, Carboxylat, Oxalat und Nitrat;
r ist 2, wenn X = Sulfat, Carbonat oder Oxalat und
r ist 1, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (V) auf,

M(X)ₛ (V),

wobei
M ausgewählt ist aus den Metallkationen Mo⁴⁺, V⁴⁺ und W⁴⁺,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
   s ist 2, wenn X = Sulfat, Carbonat oder Oxalat und
   s ist 4, wenn X = Halogenid, Hydroxid, Carboxylat, Cyanat, Thiocyanat, Isocyanat, Isothiocyanat oder Nitrat,
   oder geeignete Metallsalze weisen bevorzugt eine Zusammensetzung nach der allgemeinen Formel (VI) auf,

   M(X)ₜ (VI),

   wobei
   M ausgewählt ist aus den Metallkationen Mo⁶⁺ und W⁶⁺,
   X umfasst ein oder mehrere (d.h. verschiedene) Anionen, vorzugsweise Anionen ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
   t ist 3, wenn X = Sulfat, Carbonat oder Oxalat und
   t ist 6, wenn X = Halogenid, Hydroxid, Carboxylat, Cyanat, Thiocyanat, Isocyanat, Isothiocyanat oder Nitrat.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze weisen bevorzugt eine Zusammensetzung nach der allgemeinen Formel (VII) auf

(Y)ₐM'(CN)_{b}(A)_{c} (VII),

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. Li⁺, Na⁺, K⁺, Rb⁺) und Erdalkalimetall (d.h. Be²⁺, Mg²⁺, Ca²⁺, Sr²⁺, Ba²⁺),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den erfindungsgemäß einsetzbaren DMC-Katalysatoren enthalten sind, sind Verbindungen mit Zusammensetzungen nach der allgemeinen Formel (VIII)

Mₓ[M'ₓ,(CN)_{y}]_{z} (VIII),

worin M wie in den Formeln (I) bis (IV) und
M' wie in Formel (V) definiert ist, und
x, x', y und z ganzzahlig sind und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanid-Verbindungen (VI) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt kann Zinkhexacyanocobaltat(III) verwendet werden.

Die bei der Herstellung der DMC-Katalysatoren zusetzbaren organischen Komplexliganden sind beispielsweise in US-A 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert-butylether, Diethylenglykol-mono-tert-butylether, Tripropylenglykolmono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionische oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanocobaltat) wird in Gegenwart des organischen Komplexliganden (z.B. tert-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt kann die Isolierung des Feststoffs (d.h. die Vorstufe des Katalysators) aus der Suspension durch bekannte Techniken, wie Zentrifugation oder Filtration, erfolgen.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäß einsetzbaren Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung eine weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (3.-1) mit einer wässrigen Lösung des organischen Komplexliganden gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäß einsetzbaren Katalysator zu entfernen. Besonders bevorzugt liegt die Menge des organischen Komplexliganden in der wässrigen Waschlösung zwischen 40 und 80 Gew.-%, bezogen auf die Gesamtlösung des ersten Waschschritts. In den weiteren Waschschritten (3.-2) wird entweder der erste Waschschritt einmal oder mehrmals, vorzugsweise einmal bis dreimal wiederholt, oder vorzugsweise wird eine nichtwässrige Lösung, wie z.B. eine Mischung oder Lösung aus organischen Komplexliganden und weiterer komplexbildender Komponente (bevorzugt im Bereich zwischen 0,5 und 5 Gew.-%, bezogen auf die Gesamtmenge der Waschlösung des Schrittes (3.-2)), als Waschlösung eingesetzt und der Feststoff damit einmal oder mehrmals, vorzugsweise einmal bis dreimal gewaschen.

Der isolierte und gegebenenfalls gewaschene Feststoff kann anschließend, gegebenenfalls nach Pulverisierung, bei Temperaturen von 20 - 100°C und bei Drücken von 0,1 mbar bis Normaldruck (1013 mbar) getrocknet werden.

Ein bevorzugtes Verfahren zur Isolierung der erfindungsgemäß einsetzbaren DMC-Katalysatoren aus der Suspension durch Filtration, Filterkuchenwäsche und Trocknung wird in WO-A 01/80994 beschrieben.

In einer weiteren Ausführungsform des erfindungsgemäßen Verfahrens wird eine Brönsted-Säure als Katalysator (4) verwendet.

Gemäß der gängigen, fachlichen Definition sind unter Brönsted-Säuren Stoffe zu verstehen, welche Protonen an einen zweiten Reaktionspartner, die sogenannte Brönsted-Base übertragen können. Im Sinne der vorliegenden Erfindung bezeichnet der Begriff des Brönsted-sauren Katalysators eine nicht-polymere Verbindung, wobei der Brönsted-saure Katalysator eine berechnete Molmasse von ≤ 1200 g/mol, bevorzugt von ≤ 1000 g/mol und besonders bevorzugt von ≤ 850 g/mol aufweist.

Im erfindungsgemäßen Verfahren weist die Brönsted-Säure einen pKs-Wert von 1 oder kleiner, bevorzugt von kleiner gleich Null auf.

Die Brönsted-Säure ist beispielsweise ausgewählt aus einer oder mehreren Verbindung(en) der Gruppe bestehend aus aliphatischen fluorierten Sulfonsäuren, aromatischen fluorierten Sulfonsäuren, Trifluormethansulfonsäure, Perchlorsäure, Chlorwasserstoffsäure, Bromwasserstoffsäure, Jodwasserstoffsäure, Fluorsulfonsäure, Bis(trifluoromethan)sulfonimid, Hexafluorantimonsäure, Pentacyanocyclopentadien, Pikrinsäure, Schwefelsäure, Salpetersäure, Trifluoressigsäure, Trichloressigsäure, Methansulfonsäure, Paratoluolsulfonsäure, aromatische Sulfonsäuren und aliphatische Sulfonsäuren.

In einer bevorzugten Ausführungsform des erfindungsgemäßen Verfahrens ist die Brönsted-Säure eine oder mehrere Verbindung(en) ausgewählt aus der Gruppe bestehend aus Trifluormethansulfonsäure, Perchlorsäure, Chlorwasserstoffsäure, Bromwasserstoffsäure, Jodwasserstoffsäure, , Schwefelsäure, Salpetersäure, Methansulfonsäure, Trichloressigsäure und Trifluoressigsäure. Besonders bevorzugt wird als Brönsted-Säure Trifluormethansulfonsäure eingesetzt.

In einer weiteren Ausführungsform des erfindungsgemäßen Verfahrens wird ein Amin als Katalysator (4) verwendet.

In einer bevorzugten Ausführungsform des erfindungsgemäßen Verfahrens wird ein tertiäres Amin als Katalysator (4) verwendet.

Tertiäre Amine sind entsprechend des allgemeinen Fachwissens Derivate des Ammoniaks mit tertiären Amin-Gruppen, bei denen alle 3 Wasserstoffatome durch Alkyl-, Cycloalkyl-, Aryl Gruppen ersetzt worden sind, wobei diese Alkyl-, Cycloalkyl-, Aryl-Gruppen identisch oder verschieden sein können, sich auch zu ein- oder mehrkernigen heterocyclischen Ringsystemen zusammenschließen. Darüber hinaus können die tertiären Amine auch mehrere tertiäre Amin-Gruppen enthalten. Die erfindungsgemäßen tertiären Amine können auch weitere Heteroatome wie beispielsweise Sauerstoff enthalten.

In einer Ausführungsform des erfindungsgemäßen Verfahrens ist das tertiäre Amin eine oder mehrere Verbindung(en) und wird ausgewählt aus der Gruppe bestehend aus Trimethylamin Triethylendiamin, Trisopropylamin, Tributylamin, Tripentylamin, Trihexylamin, Triphenylamin, Dimethylethylamin, N,N Dimethylcyclohexylamin, Tetramethylendiamin, 1-Methyl-4-dimethylaminoethylpiperazin, Triethylamin, Tripopylamin, Tributylamin, Dimethylbutylamin, N,N-Dimethyl¬benzylamin, N,N-Dimethylcyclohexylamin, N,N',N"-Tris-(dimethyl¬amino¬ipropyl)¬¬hexahydrotriazin, Dimethylaminopropyl¬form¬amid, N,N,N',N'-Tetra¬methyl¬ethylen¬diamin, N,N,N',N'-Tetramethylbutandiamin, Tetramethyl¬hexan¬¬diamin, Penta¬methyldiethylentriamin, Tetramethyldiaminoethylether, Di¬methyl¬piperazin, 1,2-Dimethylimidazol, 1-Azabicyclo[3.3.0]octan, Bis-(dimethyl¬amino¬propyl)-harn¬stoff, Bis-(dimethyl¬amino-ethyl)-ether N-Methy¬morpholin, N-Ethylmorpholin, N Cyclohexyl¬morpholin, 2,3-Di-methyl-3,4,5,6-tetrahydro¬pyrimidin, Triethanolamin, Diethanol¬amin, Triiso¬pro¬panol-amin, N-Methyldiethanolamin, N-Ethyldiethanolamin, Dimethyl¬ethanol¬amin,, 1,8-Diazabicyclo[5.4.0]undec-7-en (DBU), 1,5,7-Triazabicyclo[4.4.0]dec-5-en (TBD), 1,4-Diazabicyclo[2.2.2]octan (DABCO), Imidazol, 1-Methylimidazol, 2-Methylimidazol, 4(5)-Methylimidazol, 2,4(5)Dimethylimidazol, 1-Ethylimidazol, 2-Ethylimidazol, 1-Phenylimidazol, 2-Phenylimidazol, 4(5)Phenylimidazol und N,N-dimethylaminopyridin, Guanidin, 1,1,3,3,-Tetramethylguanidin, Pyridin, 1-Azanaphthalin (Chinolin), N-Methylpiperidin, N-Methylmorpholin, N, N'-Dimethylpiperazin und N,N-Dimethylanilin.

In einer bevorzugten Ausführungsform des erfindungsgemäßen Verfahrens ist der Amin-Katalysator eine oder mehrere Verbindung(en) und wird ausgewählt aus der Gruppe bestehend aus Benzyldimethylamin, N,N-Dimethylcyclohexylamin, Diazabicyclo[2.2.2]octan (DABCO), Imidazol, 1-Methylimidazol, 2-Methylimidazol, 4(5)-Methylimidazol, 2,4(5)Dimethylimidazol, 1-Ethylimidazol, 2-Ethylimidazol, 1-Phenylimidazol, 2-Phenylimidazol, und 4(5)Phenylimidazol.

In einer Ausführungsform des erfindungsgemäßen Verfahrens wird der Amin-Katalysator in einer Menge von 10 - 50000 ppm (bezogen auf die Gesamtmasse des Produktes) eingesetzt, bevorzugt 100 - 10000 ppm.

Gemäß der gängigen fachlichen Definition ist unter einem Lösungsmittel eine oder mehrere Verbindungen zu verstehen, die die H-funktionelle Starterverbindung (1), das cyclische Anhydrid (2), das Alkylenoxid (3) und/oder den Katalysator (4) lösen ohne jedoch selbst mit der H-funktionellen Starterverbindung (1), dem cyclischen Anhydrid (2), dem Alkylenoxid (3) und/oder dem Katalysator (4) zu reagieren.

In einer Ausführungsform wird das erfindungsgemäße Verfahren ohne Zusatz eines Lösungsmittels durchgeführt, so dass dieses nach der Herstellung des Etheresterols, bevorzugt des Polyetheresterols nicht in einem zusätzlichen Verfahrensschritt abgetrennt werden muss.

In einer Ausführungsform umfasst das erfindungsgemäße Verfahren folgende Schritte
i) Umsetzen der H-funktionellen Startersubstanz (1) und des cyclischen Anhydrids (2) optional in Gegenwart des Katalysators (4) unter Bildung eines Gemisches (i)
ii) Zugabe der Teilmenge des Alkylenoxids (3) unter Bildung des Etheresterols, bevorzugt des Polyetheresterols.

In einer bevorzugten Ausführungsform ist die H-funktionellen Startersubstanz (1) eine OH-funktionelle Startersubstanz (1-1) mit terminalen Hydroxylgruppen und die Umsetzung mit dem cyclischen Anhydrid (2), umfassend das erfindungsgemäße Alkylbernsteinsäureanhydrid (2-1) in Schritt (i), erfolgt in einer Polyadditionsreaktion. Diese Polyadditionsreaktion ist gegenüber dem aus Stand der Technik vorbeschriebenen Polykondensationsreaktionen mit Di- oder Polycarbonsäuren, wie beispielsweise Methylbernsteinsäure, vorteilhaft, da kein Koppelprodukt wie beispielsweise Wasser abgetrennt werden muss. Diese Abtrennung bedingt zusätzlichen zeitlichen und apparativen Aufwand.

In einer bevorzugten Ausführungsform des erfindungsgemäßen Verfahrens wird der Katalysator (4) in Schritt (i) zugegeben

In einer alternativen bevorzugten Ausführungsform des erfindungsgemäßen wird eine Teilmenge (m4-1) des Katalysators (4) in Schritt i) und eine zweite Teilmenge des Katalysators (m4-2) zeitlich zwischen Schritt (i) und Schritt (ii) zugegeben, wodurch eine weitere Reduktion der Viskosität des Etheresterols, bevorzugt eines Polyetheresterols erzielt wird.

In einer Ausführungsform des erfindungsgemäßen Verfahrens werden 50,1 mol-% bis 100 mol-% bevorzugt 60 mol-% bis 100 mol-% der Teilmenge (m4-2) des Katalysators bezogen auf die Summe der Teilmenge (m4-1) und Teilmenge (m4-2) zugegeben.

Hierbei kann das in Teilmenge (m4-1) zugegebene tertiäre Amin identisch oder verschieden von dem als Teilmenge (m4-2) zugegebenen tertiären Amin sein. Bevorzugt sind die zugegebenen Amine identisch.

In einer alternativen, weniger bevorzugten Ausführungsform umfasst das erfindungsgemäße Verfahren das Umsetzen der erfindungsgemäßen OH-funktionelle Startersubstanz (1-1) mit dem erfindungsgemäßen cyclischen Anhydrids (2) enthaltend das erfindungsgemäße Alkylbernsteinsäureanhydrid (2-1) in Anwesenheit der erfindungsgemäßen COOH funktionellen Startersubstanz (1-4) optional in Gegenwart eines Veresterungskatalysators bevorzugt in Gegenwart eines Veresterungskatalysators. Durch die Anwesenheit der COOH funktionellen Startersubstanz (1-4) enthaltend freie Carboxygruppen erfolgt die Umsetzung mit der OH-funktionellen Startersubstanz (1-1) in einer Polykondensationsreaktion, wobei resultierendes Wasser abgetrennt werden muss.

Sämtliche für die Herstellung von Polyestern bekannte Veresterungskatalysatoren kommen hierbei in Frage. Ebenso können dem Reaktionsgemisch Katalysatoren zur Katalyse der Veresterungsreaktion hinzugefügt werden. Hier seien beispielhaft genannt: Zinn(II)-Salze, wie z.B Zinndichlorid, Zinndichlorid-Dihydrat, Zinn(II)-2-ethylhexanoat, Dibutylzinndilaurat; Titanalkoxylate, wie z.B. Titantetrabutanolat, Tetraisopropyltitanat; Bismuth(III)-neodecanoat; Zink(II)-acetat; Mangan(II)-acetat oder Protonsäuren, wie z.B. p Toluolsulfonsäure. Weiterhin können die Veresterungen auch durch Enzyme, wie z.B. Esterasen und/oder Lipasen, katalysiert werden.

In einer Ausführungsform des erfindungsgemäßen Verfahrens ist das Stoffmengenverhältnis des cyclischen Anhydrids (2) zur Starterfunktionalität der H-funktionellen Startersubstanz (1) zwischen 0,5 zu 1 bis 20 zu 1, bevorzugt zwischen 0,5 zu 1 bis 10 zu l.

In einer Ausführungsform des erfindungsgemäßen Verfahrens ist die H-funktionelle Startersubstanz (1) eine OH-funktionelle Startersubstanz (1-1) mit terminalen Hydroxylgruppen ist und das Stoffmengenverhältnis des Alkylenoxids (3) zum cyclischen Anhydrid (2) von 1,05 zu 1 bis 3,0 zu 1 , bevorzugt von 1,1 zu 1 bis 2,0 zu 1.

In einer alternativen Ausführungsform des erfindungsgemäßen Verfahrens ist die H-funktionelle Startersubstanz (1) eine COOH-funktionelle Startersubstanz (1-4) mit Carboxylgruppen und das Stoffmengenverhältnis des Alkylenoxids (3) zum cyclischen Anhydrid (2) ist von 1,5 zu 1 bis 8,0 zu 1, bevorzugt von 1,8 zu 1 bis 5,0 zu 1.

In einer weiteren Ausführungsform des erfindungsgemäßen Verfahrens wird die H-funktionelle Startersubstanz (1) kontinuierlich in den Reaktor zugegeben.

In einer weiteren Ausführungsform des erfindungsgemäßen Verfahrens wird das cyclische Anhydrid (2) kontinuierlich oder stufenweise in den Reaktor zugegeben.

In einer weiteren Ausführungsform des erfindungsgemäßen Verfahrens wird das cyclische Alkylenoxid (3) kontinuierlich oder stufenweise in den Reaktor zugegeben.

In einer weiteren Ausführungsform des erfindungsgemäßen Verfahrens wird der Katalysator (4) kontinuierlich oder stufenweise in den Reaktor zugegeben.

In einer weiteren Ausführungsform des erfindungsgemäßen Verfahrens wird in Schritt i) die H-funktionelle Startersubstanz (1) im Reaktor vorgelegt und das cyclische Anhydrid (2) stufenweise oder kontinuierlich in den Reaktor zugegeben.

In einer weiteren alternativen Ausführungsform des erfindungsgemäßen Verfahrens wird in Schritt i) das cyclische Anhydrid (2) im Reaktor vorgelegt und die H-funktionelle Startersubstanz (1) stufenweise oder kontinuierlich in den Reaktor zugegeben.

In einer weiteren alternativen Ausführungsform des erfindungsgemäßen Verfahrens wird das Polyesterpolyol kontinuierlich oder stufenweise, bevorzugt kontinuierlich aus dem Reaktor entnommen.

Ein weiterer Gegenstand der vorliegenden Erfindung ist ein Etheresterol bevorzugt ein Polyetheresterol erhältlich nach dem vorgeschriebenen erfindungsgemäßen Verfahren.

In einer Ausführungsform weist das erfindungsgemäße Etheresterol bevorzugt das Polyetheresterol eine Viskosität von 1 mPas bis 100000 mPas, bevorzugt von 500 mPas bis 20000 mPas auf, wobei die Viskosität mittels der im Experimentalteil offenbarten Methode bestimmt wurde.

In einer Ausführungsform weist das erfindungsgemäße Etheresterol bevorzugt ein Polyetheresterol ein zahlenmittleren Molekulargewicht 18 g/mol bis 10000 g/mol, bevorzugt von 100 g/mol bis 3000 g/mol, wobei das zahlenmittlere Molekulargewicht mittels der im Experimentalteil offenbarten Gel-Permeations-Chromatographie (GPC) bestimmt wird.

Ein weiterer Gegenstand der vorliegenden Erfindung ist ein Verfahren zur Herstellung eines Polyurethans durch Umsetzung des erfindungsgemäßen Etheresterols bevorzugt ein Polyetheresterols mit einem Polyisocyanat.

Das Polyisocyanat kann ein aliphatisches oder aromatisches Polyisocyanat sein. Beispiele sind 1,4-Butylendiisocyanat, 1,5-Pentandiisocyanat, 1,6-Hexamethylendiisocyanat (HDI) bzw. deren Dimere, Trimere, Pentamere, Heptamere oder Nonamere oder Gemische derselben, Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat (NDI), 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen. Bevorzugt ist hierbei ein Isocyanat aus der Diphenylmethandiisocyanatreihe.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

### Beispiele

Die vorliegende Erfindung wird anhand der nachfolgenden Figuren und Beispiele näher erläutert, ohne jedoch darauf beschränkt zu sein.

### Verwendete Ausgangsstoffe

### H-funktionelle Startersubstanz (1): "Starter (1)"

| | |
|---|---|
| Diethylenglycol (DEG) | (Reinheit 99% Sigma-Aldrich) |
| PEG-200 (PEG) | (Sigma-Aldrich) |

### cyclisches Anhydrid (2): "CA (2)"

| | |
|---|---|
| Bernsteinsäureanhydrid (BSA) | (Reinheit 99%, ABCR) |
| Methylbernsteinsäureanhydrid (MeBSA) | (Reinheit 98%, Sigma Aldrich) |

### Alkylenoxid (3): "AO (3)"

| | |
|---|---|
| Ethylenoxid | EO (3.0 Gerling Holz): |

### Katalysatoren: "Kat (4)"

| | |
|---|---|
| Benzyldimethylamin (BDA) | (Reinheit ≥99%, Sigma Aldrich) |
| Diazabicyclo[2.2.2]octan (DABCO) | (Reinheit ≥99%, Sigma Aldrich) |

### Materialien für Verschäumungsexperimente:

| | |
|---|---|
| Stepanpol PS 2352 | Stepanpol PS2352, aromatischer Polyester-Polyol der Fa. Stepan mit einer OH-Zahl von 240 mg KOH/g |
| Tegostab B 8421 | Tegostab B8421, Schaumstabilisator der Fa. Evonik |
| Levagard PP | TCPP, halogeniertes Flammschutzmittel der Fa. Lanxess |
| Desmorapid 726B | Cyclohexyldimethylamin. 99 % Sigma-Aldrich |
| Desmorapid 1792 | Desmorapid 1792, Katalysator mit 25 Gew.% Kaliumacetat der Fa. Covestro Deutschland AG |
| 44V20L | Desmodur 44V20L der Fa. Covestro Deutschland AG, polymeres Isocyanat mit einem NCO-Gehalt von 30,5 bis 32,5 Gew.% und einer Viskosität von 200 mPa*s |
| c/i-Pentan | Gemisch aus Cyclo- und Iso-Pentan (30:70), Treibmittel |

### Beschreibung der Methoden:

OH-Zahl: Die Bestimmung der OH-Zahl erfolgte gemäß der Vorschrift der DIN 53240-1.

COOH-Zahl: Die Bestimmung der Säurezahl erfolgte gemäß DIN EN ISO 2114.

Viskosität: Rheometer MCR 51 der Firma Anton Paar entsprechend DIN 53019-1 mit einem Messkegel CP 50-1, Durchmesser 50 mm, Winkel 1° bei Scherraten von 25, 100, 200 und 500 s⁻¹. Die erfindungsgemäßen und nicht erfindungsgemäßen Polyole zeigen von der Scherrate unabhängige Viskositätswerte.

Kennzahl: Bezeichnet das mit 100 multiplizierte molare Verhältnis von NCO- zu NCOreaktiven Gruppen einer Rezeptur

Rohdichte: Die Rohdichte wurde gemäß DIN EN ISO 845 (Oktober2009) bestimmt.

Offenzelligkeit: Die Offenzelligkeit der PUR/PIR-Hartschaumstoffe wurde mit eine mAccupyk-1330-Gerät an Probekörpern mit den Maßen 5 cm x 3 cm x 3 cm nach DIN EN ISO 4590 (August 2003) gemessen.

Brandeigenschaften: Die Flammenausbreitung der PUR/PIR-Hartschaumstoffe wurde durch Kantenbeflammung an eine 18 cm x 9 cm x 2 cm großen Probe mit Kleinbrennertest angelehnt an DIN 4102-1 gemessen. Die Brandklasse wurde durch 2 Einzelmessungen der Flammhöhe bestimmt. Zum Erreichen der Brandklasse B2 ist es notwendig, dass die 2 Einzelwerte unter 15 cm liegen. Bei Flammenhöhen von über 15 cm resultiert die Brandklasse B3.

Gel-Permeations-Chromatographie (GPC): Die Messungen erfolgten auf einem Agilent 1200 Series (G1311A Bin Pump, G1313A ALS, G1362A RID), Detektion über RID; Elutionsmittel: Tetrahydrofuran (GPC grade), Flussrate 1.0 mL/min bei 40°C Säulentemperatur; Säulenkombination: 2 x PSS SDV Vorsäule 100 Å (5 µm), 2x PSS SDV 1000 Å (5 µm). Zur Kalibrierung wurde das ReadyCal-Kit Poly(styrene) low im Bereich Mp = 266 - 66000 Da von "PSS Polymer Standards Service" verwendet. Als Messaufnahme- und Auswertungssoftware wurde das Programmpaket "PSS WinGPC Unity" verwendet. Der Polydispersitätsindex aus gewichtetem (Mw) und Zahlenmittlerem (Mn) Molekulargewicht der Gel-Permeations-Chromatographie ist definiert als Mw/Mn.

### Beispiel 1: EO/BSA/MeBSA-basiertes Polyetheresterpolyol

In einen 2.0 L Stahlreaktor wird ein Gemisch aus Diethylenglycol (105 g, 0,99 mol, 0,79 eq.), PEG-200 (52,7 g, 0,26 mol, 0,21 eq.), Bernsteinsäureanhydrid (176 g, 1,76 mol, 1,41 eq.), Methylbernsteinsäureanhydrid (176 g, 1,54 mol, 1,23 eq.) und der Katalysator (Benzyldimethylamin, 0,706 g, 1000 ppm) vorgelegt. Der Reaktor wird dicht verschlossen und mit N₂ inertisiert (3 x 25 bar N₂ → 1-2 bar N₂). Der Reaktor wird mit N₂-Atmosphäre auf 125 °C erhitzt um das Bernsteinsäureanhydrid/ Methylbernsteinsäureanhydrid-Gemisch zu schmelzen. Es wird anschließend mit 1200 U/min bei 125 °C für 60 min gerührt. Der N₂-Druck wird auf 45 bar eingestellt und bei 125 °C wird Ethylenoxid (196 g, 4,44 mol, 3,55 eq.) für 90 min dosiert. Die Reaktion wird für 150 min bei 125 °C nachgerührt. Der Reaktor wird abgekühlt, entspannt und mit N₂ gespült. Flüchtige Komponenten werden am Vakuum entfernt.

### Vergleichsbeispiel 2: EO/BSA -basiertes Polyetheresterpolyol

In einen 2.0 L Stahlreaktor wird ein Gemisch aus Diethylenglycol (100 g, 0,94 mol, 0,79 eq.), PEG-200 (50 g, 0,25 mol, 0,21 eq.), Bernsteinsäureanhydrid (328 g, 3,27 mol, 3.00 eq.) und Katalysator (Benzyldimethylamin, 1,00 g, 1500 ppm) vorgelegt. Der Reaktor wird dicht verschlossen und mit N₂ inertisiert (3 x 25 bar N₂ → 1-2 bar N₂). Der Reaktor wird mit N₂-Atmosphäre auf 125 °C erhitzt um das Bernsteinsäureanhydrid zu schmelzen. Es wird anschließend mit 1200 U/min bei 125 °C für 60 min gerührt. Der N₂-Druck wird auf 45 bar eingestellt und bei 125 °C wird Ethylenoxid (191 g, 4,34 mol, 3,64 eq.) für 90 min dosiert. Die Reaktion wird für 150 min bei 125 °C nachgerührt. Der Reaktor wird abgekühlt, entspannt und mit N₂ gespült. Flüchtige Komponenten werden am Vakuum entfernt.

### Beispiel 3: EO/BSA/MeSA-basiertes Polyetheresterpolyol

In einen 2.0 L Stahlreaktor wird ein Gemisch aus Wasser (20,1 g, 1,12 mol, 1,00 eq.), Bernsteinsäureanhydrid (201 g, 2,01 mol, 1,79 eq.), Methylbernsteinsäureanhydrid (201 g, 1,76 mol, 1,57 eq.) und der Katalysator (Benzyldimethylamin, 0,685 g, 1000 ppm) vorgelegt. Der Reaktor wird dicht verschlossen und mit N₂ inertisiert (3 x 25 bar N₂ → 1-2 bar N₂). Der Reaktor wird mit N₂-Atmosphäre auf 125 °C erhitzt um das Bernsteinsäureanhydrid/ Methylbernsteinsäureanhydrid-Gemisch zu schmelzen. Es wird anschließend mit 1200 U/min bei 125 °C für 60 min gerührt. Der N₂-Druck wird auf 45 bar eingestellt und bei 125 °C wird Ethylenoxid (264 g, 5,99 mol, 5,35 eq.) für 90 min dosiert. Die Reaktion wird für 150 min bei 125 °C nachgerührt. Der Reaktor wird abgekühlt, entspannt und mit N₂ gespült. Flüchtige Komponenten werden am Vakuum entfernt.

### Vergleichsbeispiel 4: EO/BSA-basiertes Polyetheresterpolyol

In einen 2.0 L Stahlreaktor wird ein Gemisch aus Wasser (20,1 g, 1,12 mol, 1,00 eq.), Bernsteinsäureanhydrid (402 g, 4,02 mol, 3,58 eq.) und der Katalysator (Benzyldimethylamin, 0,685 g, 1000 ppm) vorgelegt. Der Reaktor wird dicht verschlossen und mit N2 inertisiert (3 x 25 bar N2 → 1-2 bar N2). Der Reaktor wird mit N2-Atmosphäre auf 125 °C erhitzt um das Bernsteinsäureanhydrid/ Methylbernsteinsäureanhydrid-Gemisch zu schmelzen. Es wird anschließend mit 1200 U/min bei 125 °C für 60 min gerührt. Der N2-Druck wird auf 45 bar eingestellt und bei 125 °C wird Ethylenoxid (264 g, 5,99 mol, 5,35 eq.) für 90 min dosiert. Die Reaktion wird für 150 min bei 125 °C nachgerührt. Der Reakor wird abgekühlt, entspannt und mit N2 gespült. Flüchtige Komponenten werden am Vakuum entfernt.

### Beispiel 5: EO/MeBSA-basiertes Polyetheresterpolyol

In einen 300 mL Stahlreaktor wird ein Gemisch aus Ethylenglycol (16,0 g, 0,258 mol, 1,00 eq.) und Methylbernsteinsäureanhydrid 75,3 g, 0,66 mol, 2,56 eq.), und der Katalysator (DABCO, 0,132 g, 1000 ppm) vorgelegt. Der Reaktor wird dicht verschlossen und mit N₂ inertisiert (3 x 25 bar N₂ → 1-2 bar N₂). Der Reaktor wird mit N₂-Atmosphäre auf 125 °C erhitzt um das Methylbernsteinsäureanhydrid-Gemisch zu schmelzen. Es wird anschließend mit 1200 U/min bei 125 °C für 60 min gerührt. Der N₂-Druck wird auf 45 bar eingestellt und bei 125 °C wird Ethylenoxid (40,4 g, 0,92 mol, 3,57 eq.) für 120 min dosiert. Die Reaktion wird für 120 min bei 125 °C nachgerührt. Der Reaktor wird abgekühlt, entspannt und mit N₂ gespült. Flüchtige Komponenten werden am Vakuum entfernt.

### Beispiel 6: EO/BSA/MeSA-basiertes Polyetheresterpolyol

In einen 300 mL Stahlreaktor wird ein Gemisch aus Ethylenglycol (16,0 g, 0,258 mol, 1,00 eq.), Bernsteinsäureanhydrid (49,1 g, 0,49 mol, 1,90 eq.), und Methylbernsteinsäureanhydrid 24,6 g, 0,216 mol, 0,84 eq.), und der Katalysator (DABCO, 0,132 g, 1000 ppm) vorgelegt. Der Reaktor wird dicht verschlossen und mit N₂ inertisiert (3 x 25 bar N₂ → 1-2 bar N₂). Der Reaktor wird mit N₂-Atmosphäre auf 125 °C erhitzt um das Bernsteinsäureanhydrid-/ Methylbernsteinsäureanhydrid-Gemisch zu schmelzen. Es wird anschließend mit 1200 U/min bei 125 °C für 60 min gerührt. Der N₂-Druck wird auf 45 bar eingestellt und bei 125 °C wird Ethylenoxid (42,4 g, 0,96 mol, 3,73 eq.) für 120 min dosiert. Die Reaktion wird für 120 min bei 125 °C nachgerührt. Der Reaktor wird abgekühlt, entspannt und mit N₂ gespült. Flüchtige Komponenten werden am Vakuum entfernt.

### Verschäumungsexperimente

Auf Basis der Polyolkomponenten wurden im Labor PUR/PIR-Hartschaumstoffe durch die Vermischung von 0.3 dm³ eines Reaktionsgemisches in einem Pappbecher hergestellt. Dazu wurden die jeweiligen Polyolkomponente, das Flammschutzmittel, der Schaumstabilisator, Katalysatoren und c/i-Pentan (30:70) als Treibmittel zugesetzt und kurz gerührt. Die erhaltene Mischung wurde mit dem Isocyanat vermischt und das Reaktionsgemisch in einem Papierform (2 x 2 x 1,4 dm) überführt und darin ausreagiert. Die genauen Rezepturen der einzelnen Versuche sowie die Ergebnisse der physikalischen Messungen an den erhaltenen Proben sind in Tabelle 2 wiedergegeben.

**Tabelle 1: Vergleich der Versuche 1 bis 6.**

| Versuch | Starter (1) [Gew.-%] | CA (2) [Gew.-%] | CA (2-1) Gew.-%] | AO (3) [Gew.-%] | Kat (4) [ppm] | OH#^{[a]} [mg/g] | COOH# [mg/g] | Viskosität^{[b]} [mPas] | Mₙ (Ð)^{[c]} [g/mol (-)] | D |
|---|---|---|---|---|---|---|---|---|---|---|
| 1 | DEG: 15,0 PEG-200: 7,5 | BSA: 24,5 | MeBSA: 24,5 | EO 28,5 | BDA 1500 ppm | 221 | 0,5 | 1870 | 750 | 1.55 |
| | DEG: 15,0 PEG-200: 7,5 | BSA: 49,0 | MeBSA: 0,0 | EO 28,5 | BDA 1500 ppm | 234 | 0.2 | fest (Tₘ: 70 °C, 34 J/g) | 820 | 1.52 |
| 3 | H₂O: 2,9 | BSA: 29,3 | MeBSA: 29,3 | EO 38,5 | BDA 1000 ppm | 201 | 0,9 | 3300 | 850 | 1.57 |
| 4^{ref} | H₂O: 2,9 | BSA: 58,6 | MeBSA: 0,0 | EO 38,5 | BDA 1000 ppm | ^{-[d]} | ^{-[d]} | fest (n.d.) | ^{-[d]} | - |
| 5 | EG: 12,1 | BSA: 0,0 | MeBSA: 100 | EO 31,8 | DABCO 1000 ppm | 248 | 1,2 | 2260 | 720 | 1.51 |
| 6 | EG: 12,1 | BSA: 66,7 | MeBSA: 33,3 | EO 31,8 | DABCO 1000 ppm | 257 | 1,7 | 2100 | 720 | 1.53 |

| | | | | | | | | | | |
|---|---|---|---|---|---|---|---|---|---|---|
| ^{[a]}Summe aus gemessener OH# und COOH#; ^{[b]} Viskosität ermittelt über Rheometer MCR 51 der Firma Anton Paar entsprechend DIN 53019-1 ^{[c]} ermittelt über GPC-Analyse in THF bei RT, ^{[d]}nicht messbar über die definierten Analyseverfahren;. | | | | | | | | | | |

**Tabelle 2: Zusammensetzung und Ergebnisse der Verschäumungsexperimente**

| | | | | |
|---|---|---|---|---|
| Beispiel | | 7 (Vergleich) | 8 | 9 |
| Kennzahl | | 323 | 341 | 339 |
| Stepanpol PS 2352 | [Teile] | 77.6 | - | - |
| Beispiel 1 | [Teile] | - | 77.6 | - |
| Beispiel 3 | [Teile] | - | - | 77.6 |
| Levagard TCPP | [Teile] | 15.5 | 15.5 | 15.5 |
| Tegostab B8421 | [Teile] | 2.0 | 2.0 | 2.0 |
| Wasser | [Teile] | 1.2 | 1.2 | 1.2 |
| Desmorapid 1792 | [Teile] | 2.8 | 2.8 | 2.8 |
| Desmorapid 726B | [Teile] | 0.9 | 0.9 | 0.9 |
| c/i-Pentan | [Teile] | 18.8 | 18.8 | 18.8 |
| Desmodur 44V20L | [Teile] | 220 | 220 | 220 |
| Startzeit | [s] | 14 | 16 | 14 |
| Abbindezeit | [s] | 43 | 49 | 49 |
| Steigzeit | [s] | 68 | 73 | 73 |
| Klebfreizeit | [s] | 90 | 90 | 110 |
| Rohdichte | [kg/m³] | 29.9 | 29.4 | 29.7 |
| Offenzelligkeit | [%] | 9.6 | 9.6 | 11.2 |
| Flammhöhe | [cm] | 16/15 | 13/13 | 13/13 |
| Brandklasse | - | B3 | B2 | B2 |

## Patentansprüche

1. Verfahren zur Herstellung eines Etheresterols, bevorzugt eines Polyetheresterols, durch Umsetzung einer H-funktionellen Startersubstanz (1) mit einem cyclischen Anhydrid (2) in Gegenwart eines Katalysators (4);
wobei das cyclische Anhydrid (2) Alkylbernsteinsäureanhydrid (2-1) der folgenden Formel (I) enthält: 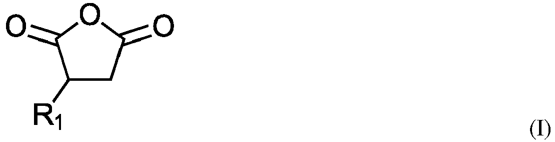 Wobei R1 Methyl, Ethyl, n-Propyl, iso-Propyl, n-Butyl, iso-Butyl, n-Pentyl, iso-Pentyl, n-Hexyl, iso-Hexyl, n -Heptyl, iso-Heptyl, n-Octyl, iso-Octyl, n-Nonyl, iso-Nonyl, n-Decyl, iso-Decyl, n-Dodecanyl, iso-Dodecyl oder Cyclohexyl, bevorzugt Methyl, Ethyl, n-Propyl, iso-Propyl, n-Butyl, iso-Butyl n-Hexyl oder iso-Hexyl und besonders bevorzugt Methyl ist.

2. Verfahren gemäß Anspruch 1, wobei die Umsetzung in Gegenwart eines Alkylenoxids (3) erfolgt.

3. Verfahren gemäß Anspruch 1 oder 2, wobei der Stoffmengenanteil des Alkylbernsteinsäureanhydrids (2-1) von 5 mol-% bis 100 mol-% bevorzugt von 15 mol-% bis 100 mol-% und besonders bevorzugt von 25 mol-% bis 100 mol-% bezogen auf die Summe aller eingesetzten cyclischen Anhydride (2) beträgt.

4. Verfahren gemäß einem der Ansprüche 1 bis 3, wobei die H-funktionelle Startersubstanz (1) eine OH-funktionelle Startersubstanz(1-1), eine NH₂-funktionelle Startersubstanz (1-2), eine NH-funktionelle Startersubstanz (1-3) und/oder eine COOH funktionelle Startersubstanz (1-4) bevorzugt eine OH-funktionelle Startersubstanz (1-1) und/oder eine COOH funktionelle Startersubstanz (1-4) und besonders bevorzugt eine OH-funktionelle Startersubstanz (1-1) ist.

5. Verfahren gemäß einem der Ansprüche 2 bis 4, wobei das Alkylenoxid (3) Propylenoxid und/oder Ethylenoxid bevorzugt Ethylenoxid ist.

6. Verfahren gemäß einem der Ansprüche 1 bis 5, wobei der Katalysator (4) ein Amin, ein Doppelmetallcyanid (DMC)-Katalysator und/oder eine Brönsted-Säure bevorzugt ein Amin ist.

7. Verfahren gemäß Anspruch 6, wobei der Katalysator (4) ein Amin, bevorzugt ein tertiäres Amin ist.

8. Verfahren gemäß Anspruch 7, wobei der Katalysator (4) ein tertiäres Amin ist und das tertiäre Amin eine oder mehrere Verbindung(en) und wird ausgewählt aus der Gruppe bestehend aus Trimethylamin Triethylendiamin, Trisopropylamin, Tributylamin, Tripentylamin, Trihexylamin, Triphenylamin, Dimethylethylamin, N,N-Dimethylcyclohexylamin, Tetramethylendiamin, 1-Methyl-4-dimethylaminoethylpiperazin, Triethylamin, Tripopylamin, Tributylamin, Dimethylbutylamin, N,N-Dimethylbenzylamin, N,N-Dimethylcyclohexylamin, N,N',N"-Tris-(dimethylaminopropyl)hexahydrotriazin, Dimethylaminopropylformamid, N,N,N',N'-Tetramethylethylendiamin, N,N,N',N'-Tetramethylbutandiamin, Tetramethylhexandiamin, Pentamethyldiethylentriamin, Tetramethyldiaminoethylether, Dimethylpiperazin, 1,2-Dimethylimidazol, 1-Azabicyclo[3.3.0]octan, Bis-(dimethylaminopropyl)-harnstoff, Bis-(dimethylaminoethyl)-ether N-Methylmorpholin, N-Ethylmorpholin, N-Cyclohexylmorpholin, 2,3-Dimethyl-3,4,5,6-tetrahydropyrimidin, Triethanolamin, Diethanolamin, Triisopropanolamin, N-Methyldiethanolamin, N-Ethyldiethanolamin, Dimethylethanolamin,, 1,8-Diazabicyclo[5.4.0]undec-7-en (DBU), 1,5,7-Triazabicyclo[4.4.0]dec-5-en (TBD), 1,4-Diazabicyclo[2.2.2]octan (DABCO), Imidazol, 1-Methylimidazol, 2-Methylimidazol, 4(5)-Methylimidazol, 2,4(5)Dimethylimidazol, 1-Ethylimidazol, 2-Ethylimidazol, 1-Phenylimidazol, 2-Phenylimidazol, 4(5)Phenylimidazol und N,N-dimethylaminopyridin, Guanidin, 1,1,3,3,-Tetramethylguanidin, Pyridin, 1-Azanaphthalin (Chinolin), N-Methylpiperidin, N-Methylmorpholin, N, N'-Dimethylpiperazin und N,N-Dimethylanilin bevorzugt Benzyldimethylamin, N,N-Dimethylcyclohexylamin, Diazabicyclo[2.2.2]octan (DABCO), Imidazol, 1-Methylimidazol, 2-Methylimidazol, 4(5)-Methylimidazol, 2,4(5)Dimethylimidazol, 1-Ethylimidazol, 2-Ethylimidazol, 1-Phenylimidazol, 2-Phenylimidazol, und 4(5)Phenylimidazol.

9. Verfahren gemäß einem der Ansprüche 2 bis 8, umfassend folgende Schritte
i) Umsetzen der H-funktionellen Startersubstanz (1) und des cyclischen Anhydrids (2) optional in Gegenwart des Katalysators (4) unter Bildung eines Gemisches (i)
ii) Zugabe der Teilmenge des Alkylenoxids (3) unter Bildung des Etheresterols, bevorzugt des Polyetheresterols.

10. Verfahren gemäß einem der Ansprüche 1 bis 9, wobei das Stoffmengenverhältnis des cyclischen Anhydrids (2) zur Starterfunktionalität der H-funktionellen Startersubstanz (1) zwischen 0,5 zu 1 bis 20 zu 1, bevorzugt zwischen 0,5 zu 1 bis 10 zu 1 ist.

11. Verfahren gemäß einem der Ansprüche 2 bis 9, wobei die H-funktionelle Startersubstanz (1) eine OH-funktionelle Startersubstanz (1-1) mit terminalen Hydroxylgruppen ist und das Stoffmengenverhältnis des Alkylenoxids (3) zum cyclischen Anhydrid (2) von 1,05 zu 1 bis 3,0 zu 1 , bevorzugt von 1,1 zu 1 bis 2,0 zu 1 ist.

12. Etheresterol bevorzugt Polyetheresterol erhältlich nach mindestens einem der Ansprüche 1 bis 11.

13. Etheresterol bevorzugt Polyetheresterol gemäß Anspruch 12, wobei das Etheresterol bevorzugt Polyetheresterol eine Viskosität von 1 mPas bis 100000 mPas, bevorzugt von 500 mPas bis 20000 mPas aufweist und die Viskosität mittels der im Experimentalteil offenbarten Methode bestimmt wurde

14. Etheresterol bevorzugt Polyetheresterol gemäß Anspruch 12 oder 13, wobei das Etheresterol bevorzugt Polyetheresterol ein zahlemittleres Molekulargewicht von 18 g/mol bis 10000 g/mol, bevorzugt von 100 g/mol bis 3000 g/mol aufweist und das zahlenmittlere Molekulargewicht mittels der im Experimentalteil offenbarten Gel-Permeations-Chromatographie (GPC) bestimmt wurde.

15. Verfahren zur Herstellung eines Polyurethans durch Umsetzung des Etheresterols bevorzugt des Polyetheresterols gemäß einem der Ansprüche 12 bis 14 mit einem Polyisocyanat.
